# EUROPÄISCHE PATENTANMELDUNG

(11) **EP 2 019 347 A1**
(43) Veröffentlichungstag der Anmeldung: **28.01.2009**
(21) Anmeldenummer: 08104691.4
(22) Anmeldetag: 10.07.2008
(51) Int. Cl.: G05B 19/418

(54) **Verfahren zum Austausch von instandhaltungsrelevanten Informationen mit einem computerunterstützten Instandhaltungssystem**

(30) Priorität: 23.07.2007 DE 102007034634
(71) Anmelder: Endress+Hauser GmbH+Co. KG, 79689 Maulburg (DE)
(72) Erfinder: Maneval, Michael, 79650, Schopfheim (DE); da Silva Neto, Eugenio Ferreira, 4105, Biel-Benken (CH); Veith, Georg, 5070, Frick (CH); Nunnenmacher, Klaus, 79426, Buggingen (DE)
(74) Vertreter: Andres, Angelika Maria

(57) **Zusammenfassung**

Die vorliegende Erfindung betrifft ein Verfahren zum Austausch von instandhaltungsrelevanten Informationen bezüglich eines Feldgerätes (F0, F1, F2) mit einem computerunterstützten Instandhaltungssystem (4, 6), das in einer Datenbank instandhaltungsrelevante Informationen bezüglich des Feldgerätes (F0, F1, F2) verwaltet, unter Verwendung eines mobilen, in der Hand tragbaren Gerätes (10), das eine Schnittstelle (11) für einen drahtlosen Internetzugang aufweist. Gemäß dem Verfahren wird ein drahtloser Internetzugang von dem mobilen, in der Hand tragbaren Gerät (10) hergestellt. Anschließend werden instandhaltungsrelevante Informationen bezüglich des Feldgerätes (F0, F1, F2) zwischen dem computerunterstützten Instandhaltungssystem (4, 6), das am Internet angeschlossen ist, und dem mobilen, in der Hand tragbaren Gerät (10) über das Internet ausgetauscht.

## Beschreibung

Die Erfindung betrifft ein Verfahren zum Austausch von instandhaltungsrelevanten Informationen bezüglich eines Feldgerätes mit einem computerunterstützten Instandhaltungssystem, das in einer Datenbank instandhaltungsrelevante Informationen bezüglich des Feldgerätes verwaltet, unter Verwendung eines mobilen, in der Hand tragbaren Gerätes.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über Bussysteme (Profibus®, Foundation® Fieldbus, etc.) mit einer oder mehreren übergeordneten Einheiten verbunden. Anstelle eines Bussystems kann beispielsweise auch eine Parallelverdrahtung oder eine analoge Signalübertragung zwischen den Feldgeräten und der/den übergeordneten Einheit(en) vorgesehen sein. Normalerweise handelt es sich bei den übergeordneten Einheiten um Leitsysteme bzw. Steuereinheiten, wie beispielsweise eine SPS (speicherprogrammierbare Steuerung) oder ein PLS (Prozess Leit System). Die übergeordneten Einheiten dienen unter anderem zur Prozesssteuerung, Prozessvisualisierung, Prozessüberwachung sowie zur Inbetriebnahme der Feldgeräte.

Um die Ausfallzeiten einer Anlage, in der Feldgeräte eingesetzt werden, möglichst gering zu halten, werden in modernen Industrieanlagen häufig computerunterstützte Instandhaltungssysteme eingesetzt, die in einer Datenbank instandhaltungsrelevante Informationen bezüglich der Feldgeräte und gegebenenfalls auch der weiteren Geräte, die in der Anlage eingesetzt werden, verwalten (im Folgenden: computerunterstützte Instandhaltungssysteme). Diese in der Regel Software-basierten computerunterstützten Instandhaltungssysteme können je nach Anbieter und je nach Konfiguration der jeweiligen Anlage verschiedene Funktionen in Bezug auf die Verwaltung und Organisation von Instandhaltungsarbeiten ausführen. Insbesondere können diese computerunterstützten Instandhaltungssysteme die Abläufe und Funktionen ausführen, die herkömmlich von Wartungspersonal oder einer für die Instandhaltung der Anlage verantwortliche Verwaltungsperson manuell ausgeführt wurden, um vorzunehmende Instandhaltungsarbeiten zu planen und durchgeführte Instandhaltungsarbeiten zu dokumentieren.

Ein derartiges Software-basiertes computerunterstütztes Instandhaltungssystem ist unter der Bezeichnung "CMMS" (englisch:
"Computerised Maintenance Management System"; deutsch:
"Computerunterstütztes Instandhaltungs-Management System") bekannt. In der Regel werden durch ein CMMS zumindest die nachfolgenden Funktionen bereitgestellt, wobei Abweichungen bei den von einzelnen Anbietern angebotenen CMMS auftreten können:

- Erstellen und Planen von Instandhaltungsaufträgen für die einzelnen Feldgeräte (und gegebenenfalls weiterer Geräte einer Anlage), basierend auf gerätespezifischen Instandhaltungsintervallen und den Daten von bereits durchgeführten Instandhaltungsarbeiten sowie gegebenenfalls zusätzlich basierend auf Informationen über verfügbares Wartungspersonal;
- Aufnehmen und Dokumentieren von Serviceberichten, Fehlerberichten, Eingaben bezüglich erforderlicher Ersatzteile und/oder von Aufträgen bezüglich weiterer vorzunehmender Instandhaltungsarbeiten;
- Asset Management, insbesondere Verwaltung und Bereitstellung von Gerätedaten, Handbüchern, Checklisten, Gewährleistungsinformationen, Instandhaltungsintervallen, Sericeverträgen, Informationen über das Kaufdatum, Informationen über die zu erwartende Lebensdauer, Ersatzteilinformationen, Informationen zu Fehlermeldungen des Feldgerätes und zur Problembehandlung derselben und/oder Informationen zur Parametrierung, Kalibrierung und/oder Konfigurierung der einzelnen Feldgeräte (und gegebenenfalls weiterer Geräte einer Anlage);
- Lagerverwaltung, insbesondere Verwalten von Lagerbeständen und Durchführen einer Abfrage bezüglich der Verfügbarkeit von Ersatzteilen, Werkzeugen, Hilfsmitteln und Verbrauchsmaterialien an ein Lager (beispielsweise des Anlagenbetreibers) oder an einen Hersteller;
- Statistische Analyse, insbesondere Bereitstellung von Informationen bezüglich der Häufigkeit von verschiedenen Defekten oder Fehlern, Anzahl von bereits vorgenommenen Instandhaltungsarbeiten, Instandhaltungskosten, etc., bei den verschiedenen Feldgeräten (und gegebenenfalls bei den weiteren Geräten einer Anlage).

Alternativ oder zusätzlich zu einem CMMS kann ein "PAM" (englisch: "Plant Asset Management"; deutsch: Anlagen-Asset-Management") bereitgestellt werden. In einem PAM-System sind in der Regel für die einzelnen Feldgeräte (und gegebenenfalls für die weiteren Geräte einer Anlage) verschiedene relevante Informationen und deren zeitliche Abfolge gespeichert. Insbesondere sind in einem PAM gerätespezifische Daten angefangen von dem Herstellungsdatum bis zu dem aktuellen Datum, wie beispielsweise Informationen über vorgenommene Instandhaltungsarbeiten, über ausgetauschte Teile, etc. dokumentiert. Neben CMMS und PAM existieren weitere Software-basierte computerunterstützte Instandhaltungssysteme (im Folgenden: Hersteller-spezifische computerunterstützte Instandhaltungssysteme), durch die instandhaltungsrelevante Informationen eines oder mehrerer Feldgeräte in einer Datenbank verwaltet werden. Diese weiteren Instandhaltungssysteme führen in der Regel zumindest einen Teil der oberhalb in Bezug auf CMMS und PAM erläuterten Funktionen aus.

Dabei werden solche computerunterstützten Instandhaltungssysteme häufig anlagenübergreifend eingesetzt, um beispielsweise instandhaltungsrelevante Informationen der Feldgeräte und gegebenenfalls weiterer an einer Anlage angeschlossener Geräte von sämtlichen Anlagen eines Anlagenbetreibers zu verwalten. Dadurch ist häufig der Computer oder die Datenverarbeitungsanlage, auf der solch ein computerunterstütztes Instandhaltungssystem implementiert ist, räumlich getrennt von den einzelnen Feldgeräten (und gegebenenfalls von weiteren Geräten der Anlage) angeordnet. Wartungspersonal, das vor Ort an einem Feldgerät eine Instandhaltungsarbeit durchführt, kann damit nicht direkt auf Informationen, die in dem computerunterstützten Instandhaltungssystem gespeichert sind, zugreifen. Ferner kann das computerunterstützte Instandhaltungssystem nicht direkt durch das Wartungspersonal aktualisiert werden.
Um die für die Instandhaltung eines Feldgerätes relevanten Informationen vor Ort zur Verfügung zu haben, war es bisher üblich, die voraussichtlich erforderlichen Informationen im Voraus durch das Wartungspersonal oder durch Dritte von dem computerunterstützten Instandhaltungssystem zu beschaffen. Hierzu war es erforderlich, dass die betreffende Person den Computer oder die Datenverarbeitungsanlage, auf der das computerunterstützte Instandhaltungssystem implementiert ist, oder gegebenenfalls einen anderen Computer, der über ein entsprechendes Firmennetz auf das computerunterstützte Instandhaltungssystem zugreifen kann, aufsucht und die voraussichtlich erforderlichen Informationen in Papierform ausdruckt oder diese Informationen über eine entsprechende Schnittstelle (z.B. USB, Bluetooth oder Infrarot) auf einen "PDA" (englisch: "Personal Digital Assistant"; deutsch: "Persönlicher Digitaler Assistent") überträgt. Sofern der Computer oder die Datenverarbeitungsanlage, auf der das computerunterstützte Instandhaltungssystem implementiert ist, über einen Internetanschluss verfügte, bestand zusätzlich die Möglichkeit, dass die betreffende Person im Voraus über einen Computer mit einem stationären Internetzugang (z.B. über Kabelmodem) die voraussichtlich erforderlichen Informationen über das Internet herunterlud. Die heruntergeladenen Informationen konnten dann auf dem Computer, der sich in der Regel an dem Arbeitsplatz der betreffenden Person befand, gespeichert werden und zusätzlich in Papierform ausgedruckt und/oder auf einen PDA übertragen werden. Die Ausdrucke in Papierform und/oder den PDA mit den im Voraus abgespeicherten Informationen konnte das Wartungspersonal dann zu dem Feldgerät mit sich nehmen.

Im Voraus kann oftmals nicht abgeschätzt werden, welche Informationen genau erforderlich sind. Deshalb werden in der Regel umfangreichere Informationen beschafft, als tatsächlich erforderlich sind. Damit ist ein hoher Zeit- und Verwaltungsaufwand verbunden. Ferner kann der Fall auftreten, dass das Wartungspersonal vor Ort feststellt, dass die auf dem PDA und/oder in Papierform mitgeführten Informationen nicht ausreichend sind und weitere Informationen von dem computerunterstützten Instandhaltungssystem zu beschaffen sind. Die erforderlichen Instandhaltungsarbeiten können dadurch zunächst nicht durchgeführt werden, und es muss ein neuer Termin angesetzt werden. Ferner besteht bei dem bisherigen Verfahren die Gefahr, dass nicht vor jeder durchzuführenden Instandhaltungsarbeit die jeweils aktuellsten Informationen beschafft werden, sondern dass auf bereits vorhandene Informationen (in dem PDA oder in Papierform) zurückgegriffen wird. Diese können jedoch bereits veraltet sein. Nach Durchführung der Instandhaltungsarbeiten mussten die relevanten Informationen, wie beispielsweise ein Servicebericht, Informationen bezüglich erforderlicher Ersatzteile, etc. in den Computer oder die Datenverarbeitungsanlage, auf der das computerunterstützte Instandhaltungssystem implementiert ist, eingegeben werden. Hierzu standen wiederum die Zugangsmöglichkeiten zur Verfügung, die oberhalb in Bezug auf das Beschaffen der voraussichtlich erforderlichen Informationen erläutert wurden. Auch mit diesem nachträglichen Einfüttern von Daten war ein erheblicher Zeitaufwand verbunden.

Demgemäß besteht die Aufgabe der vorliegenden Erfindung darin, ein Verfahren bereitzustellen, durch das Wartungspersonal, das sich vor Ort an einem Feldgerät befindet, auf schnellere und einfachere Weise Informationen mit einem computerunterstützten Instandhaltungssystem austauschen kann.

Die Aufgabe wird durch ein Verfahren gemäß Anspruch 1 gelöst. Vorteilhafte Weiterbildungen der Erfindung sind in den Unteransprüchen angegeben.

Gemäß der vorliegenden Erfindung wird ein Verfahren zum Austausch von instandhaltungsrelevanten Informationen bezüglich eines Feldgerätes mit einem computerunterstützten Instandhaltungssystem, das in einer Datenbank instandhaltungsrelevante Informationen bezüglich des Feldgerätes verwaltet, unter Verwendung eines mobilen, in der Hand tragbaren Gerätes, das eine Schnittstelle für einen drahtlosen Internetzugang aufweist, bereitgestellt. Das Verfahren weist die nachfolgenden Schritte auf:
Herstellen eines drahtlosen Internetzugangs von dem mobilen, in der Hand tragbaren Gerät;
Austausch von instandhaltungsrelevanten Informationen bezüglich des Feldgerätes zwischen dem computerunterstützten Instandhaltungssystem, das am Internet angeschlossen ist, und dem mobilen, in der Hand tragbaren Gerät über das Internet.

Mit "Instandhaltung" wird im vorliegenden Zusammenhang allgemein auf Wartung, Inspektion, Instandsetzung und Verbesserung Bezug genommen. Wartung umfasst dabei Maßnahmen zur Verzögerung von Abnutzungen an einem Gerät. Inspektion umfasst insbesondere Maßnahmen zur Feststellung und Beurteilung eines Istzustandes eines Gerätes. Instandsetzung umfasst insbesondere Maßnahmen zur Rückführung eines Gerätes in den funktionsfähigen Zustand, wie beispielsweise eine Reparatur. Verbesserungen umfassen insbesondere die Steigerung der Funktionssicherheit eines Gerätes, ohne die von dem Gerät ausgeführte Funktion zu ändern. Dementsprechend umfassen auch "instandhaltungsrelevante Informationen" allgemein Informationen, welche die Maßnahmen der Wartung, der Inspektion, der Instandsetzung und der Verbesserung betreffen.

Das computerunterstützte Instandhaltungssystem kann insbesondere ein CMMS und/oder ein PAM umfassen. Diese sind in der Regel auf einem Computer oder einer Datenverarbeitungsanlage implementiert, der/die sich nicht in der Nähe der betreffenden Feldgeräte einer oder mehrerer Anlagen befindet. Ferner kann das computerunterstützte Instandhaltungssystem auch ein Hersteller-spezifisches computerunterstütztes Instandhaltungssystem umfassen. Insbesondere kann vorgesehen sein, dass nicht nur eines sondern auch mehrere von einem CMMS, einem PAM und einem Hersteller-spezifischen computerunterstützten Instandhaltungssystem auf einem Computer oder einer Datenverarbeitungsanlage implementiert sind und parallel eingesetzt werden.

Gemäß der vorliegenden Erfindung wird von dem mobilen, in der Hand tragbaren Gerät ein drahtloser Internetzugang hergestellt, so dass instandhaltungsrelevante Informationen zwischen dem computerunterstützten Instandhaltungssystem, das zumindest während der Dauer des Austauschens am Internet angeschlossen ist, und dem mobilen, in der Hand tragbaren Gerät über das Internet ausgetauscht werden können. Ein Vorteil der vorliegenden Erfindung besteht darin, dass durch den drahtlosen Internetzugang dieser nicht stationär sondern mobil ausgebildet ist, so dass von dem mobilen, in der Hand tragbaren Gerät unabhängig von der aktuellen Position des Gerätes eine Verbindung zum Internet herstellbar ist. Dadurch ist nicht mehr erforderlich, dass sich das Wartungspersonal im Voraus umfangreiche, voraussichtlich erforderliche Informationen beschafft. Vielmehr kann sich das Wartungspersonal basierend auf die am betreffenden Feldgerät vor Ort vorgefundenen Situationen über das mobile, in der Hand tragbare Gerät und den drahtlosen Internetzugang die tatsächlich erforderlichen Informationen beschaffen. Dadurch kann ein schneller Austausch von Informationen zwischen dem Wartungspersonal (bzw. dem mobilen, in der Hand tragbaren Gerät) und dem computerunterstützten Instandhaltungssystem erfolgen, so dass Zeit eingespart wird. Auch kann unmittelbarer auf bestimmte Fehlermeldungen eines Feldgerätes reagiert werden, da beispielsweise über das Internet von dem computerunterstützten Instandhaltungssystem die relevanten Informationen zur Problembehandlung beschafft und die vorzunehmenden Handlungen direkt durchgeführt werden können. Dadurch wird die für die Instandhaltung erforderliche Zeit weiter reduziert. Aufgrund der direkten Zugriffsmöglichkeit des Wartungspersonals auf die relevanten Informationen über das Internet ist es nicht erforderlich, dass das Wartungspersonal über ein hohes gerätespezifisches Spezialwissen über die einzelnen Feldgeräte verfügt.

Gemäß einer vorteilhaften Weiterbildung der Erfindung umfasst das Austauschen von instandhaltungsrelevanten Informationen das Abrufen und/oder das Eingeben von instandhaltungsrelevanten Informationen bezüglich des Feldgerätes von dem bzw. in das computerunterstützte(n) Instandhaltungssystem durch das mobile, in der Hand tragbare Gerät.

Insbesondere können von dem computerunterstützten Instandhaltungssystem die nachfolgenden Informationen abgerufen werden: Gerätedaten des Feldgerätes, Handbücher zu dem Feldgerät, Checklisten, Gewährleistungsinformationen, Instandhaltungsintervalle, Serviceverträge, Informationen über das Kaufdatum des Feldgerätes, Informationen über die zu erwartende Lebensdauer des Feldgerätes, Ersatzteilinformationen zu dem Feldgerät, Informationen bezüglich der Verfügbarkeit von Ersatzteilen, Datum der letzten Instandhaltungsmaßnahme des Feldgerätes, Informationen zu Fehlermeldungen des Feldgerätes und zur Problembehandlung, statistische Informationen bezüglich der Häufigkeit von verschiedenen Defekten und/oder von bereits vorgenommenen Instandhaltungsarbeiten, Informationen über verfügbares Wartungspersonal, Informationen zur Parametrierung, Kalibrierung und/oder Konfigurierung des Feldgerätes, Informationen bezüglich einer Zustandsüberwachung des Feldgerätes, und/oder von dem computerunterstützten Instandhaltungssystem erstellte Arbeitsaufträge. Demgemäß kann sich das Wartungspersonal umfassend über das betreffende Feldgerät und die in der Vergangenheit bereits durchgeführten Instandhaltungsarbeiten informieren. Ferner besteht zum Teil bei computerunterstützten Instandhaltungssystemen die Möglichkeit, dass diese über das Internet bei Lagerbeständen eines Herstellers und/oder bei einem Ersatzteillager des Anlagenbetreibers prüfen, ob erforderliche Ersatzteile verfügbar sind. Diese Informationen können dann ebenfalls von dem Wartungspersonal abgerufen werden, so dass direkt die nächsten Schritte geplant werden können. Wie oberhalb in Bezug auf das CMMS erläutert wurde, sind computerunterstützte Instandhaltungssysteme oftmals derart ausgebildet, dass sie Arbeitsaufträge für das Wartungspersonal erstellen. Demgemäß kann das Wartungspersonal jeweils vor Ort die an einem betreffenden Feldgerät durchzuführenden Arbeitsaufträge abrufen. Häufig werden bei Feldgeräten, bei denen ein Defekt oder ein Fehler aufgetreten ist, auf einem Display Fehlermeldungen angezeigt, anhand derer die Art des Fehlers ersichtlich ist. Das Wartungspersonal kann dann von dem computerunterstützten Instandhaltungssystem die betreffenden Informationen zu dieser Fehlermeldung und die vorzunehmenden Handlungen zur Problembehandlung dieses Fehlers abrufen. Für den Fall, dass beispielsweise eine bei einem Feldgerät durchgeführte Zustandsüberwachung einen Alarm ausgelöst hat oder eine Parametrierung, Kalibrierung und/oder Konfigurierung des Feldgerätes vorzunehmen ist, kann das Wartungspersonal die hierfür erforderlichen Informationen ebenfalls von dem computerunterstützten Instandhaltungssystem abrufen.

Weiterhin können gemäß einer bevorzugten Ausführungsform die nachfolgenden Informationen von dem mobilen, in der Hand tragbaren Gerät in das computerunterstützte Instandhaltungssystem eingegeben werden: ein Servicebericht, erforderliche Ersatzteile, ein Auftrag bezüglich weiterer vorzunehmender Instandhaltungsarbeiten, und/oder ein Fehlerbericht. Dies hat den Vorteil, dass diese Informationen direkt für Dritte verfügbar sind. Dadurch können Dritte beispielsweise direkt weitere, vorzunehmende Instandhaltungsarbeiten planen, Ersatzteile bestellen, und/oder sich anhand des Serviceberichts informieren, welche Handlungen durch das Wartungspersonal vorgenommen wurden. Durch die Eingabe eines Fehlerberichts kann dem computerunterstützten Instandhaltungssystem mitgeteilt werden, dass an einem bestimmten Feldgerät ein Fehler aufgetreten ist. Das Wartungspersonal kann dann wiederum über das computerunterstützte Instandhaltungssystem informiert werden, dass an dem betreffenden Feldgerät eine Instandhaltungsmaßnahme vorzunehmen ist.

Gemäß einer vorteilhaften Weiterbildung weist das mobile, in der Hand tragbare Gerät eine W-LAN (Wireless Local Area Network) Schnittstelle auf, so dass über ein W-LAN ein Zugang des mobilen, in der Hand tragbaren Gerätes zum Internet herstellbar ist. Eine derartige drahtlose Zugangsmöglichkeit zum Internet über ein lokales W-LAN ist auch als Hotspot-System bekannt. Alternativ oder zusätzlich kann vorgesehen sein, dass der Internetzugang des mobilen, in der Hand tragbaren Gerätes über HSDPA (High Speed Downlink Packet Access), UMTS (Universal Mobile Telecommunications System), EDGE (Enhanced Data Rates for GSM Evolution) oder GPRS (General Packet Radio Service) herstellbar ist. Vorzugsweise weist das mobile, in der Hand tragbare Gerät einen integrierten Webbrowser auf.

Gemäß einer vorteilhaften Weiterbildung der Erfindung verwaltet das computerunterstützte Instandhaltungssystem in einer Datenbank instandhaltungsrelevante Informationen bezüglich einer Vielzahl von Feldgeräten einer oder mehrerer Anlagen. Die Verwaltung einer Vielzahl von Feldgeräten einer oder mehrerer Anlagen ist der Haupteinsatzbereich von solchen computerunterstützten Instandhaltungssystemen und hat den Vorteil, dass durch den Einsatz nur einer Software die instandhaltungsrelevanten Informationen einer Vielzahl von Feldgeräten effektiv verwaltet werden können. Dadurch wird auch der Verwaltungsaufwand reduziert.

Damit das mobile, in der Hand tragbare Gerät auch Daten verarbeiten und dem Wartungspersonal weitergehende Funktionalitäten bereitstellen kann, weist es gemäß einer vorteilhaften Weiterbildung eine Datenverarbeitungseinheit auf. Vorzugsweise ist das mobile, in der Hand tragbare Gerät ein PDA (englisch: "Personal Digital Assistant"; deutsch: "Persönlicher Digitaler Assistent"). Ein PDA hat den Vorteil, dass er klein und handlich ausgebildet ist, eine Datenverarbeitungseinheit aufweist und dem Benutzer eine hohe Funktionalität bereitstellt. Es besteht hierbei die Möglichkeit, dass auch weitere Geräte, wie beispielsweise ein Handy, in den PDA integriert sind. Grundsätzlich kann auch ein Notebook als mobiles, in der Hand tragbares Gerät eingesetzt werden. Bevorzugt ist jedoch ein Gerät im Taschenformat, wie beispielsweise in der Größe eines PDA oder eines Handys.

Gemäß einer vorteilhaften Weiterbildung der Erfindung erfolgt der Austausch von instandhaltungsrelevanten Informationen bezüglich des Feldgerätes zwischen dem computerunterstützten Instandhaltungssystem und dem mobilen, in der Hand tragbaren Gerät dadurch, dass das mobile, in der Hand tragbare Gerät und das computerunterstützte Instandhaltungssystem über das Internet miteinander synchronisiert werden. Als Synchronisation wird dabei der Abgleich von Daten zwischen dem computerunterstützten Instandhaltungssystem und dem mobilen, in der Hand tragbaren Gerät, insbesondere einem PDA, verstanden. Dieser Abgleich kann auch automatisch durch ein entsprechendes Programm erfolgen.

Für den Fall, dass ein Ersatzteil für das Feldgerät erforderlich ist, kann gemäß einer vorteilhaften Weiterbildung der Erfindung eine Bestellung für das Ersatzteil direkt von dem mobilen, in der Hand tragbaren Gerät über den drahtlosen Internetzugang an einen Hersteller oder Lieferanten des Ersatzteils oder an ein Ersatzteillager (beispielsweise des Anlagenbetreibers) abgesendet werden. Gegebenenfalls kann über das mobile, in der Hand tragbare Gerät auch eine Bestätigung bezüglich der Verfügbarkeit des Ersatzteils empfangen werden, so dass das Wartungspersonal direkt die nächsten Schritte planen kann.

Gemäß einer vorteilhaften Weiterbildung ist das computerunterstützte Instandhaltungssystem als Software auf einem Computer und/oder auf einer mit mindestens einem Feldgerät verbundenen übergeordneten Einheit implementiert, wobei der Computer bzw. die übergeordnete Einheit mit dem Internet verbindbar ist. In dem Fall, in dem das computerunterstützte Instandhaltungssystem auf einem Computer installiert ist, ist nicht erforderlich, dass dieser mit den jeweiligen Feldgeräten, deren instandhaltungsrelevante Informationen verwaltet werden, verbunden ist. Vielmehr kann solch ein Computer separat und räumlich getrennt von den Feldgeräten vorgesehen sein.

Ist das computerunterstützte Instandhaltungssystem jedoch in einer übergeordneten Einheit implementiert und ist das betreffende, instandzuhaltende Feldgerät über ein Bussystem mit dieser übergeordneten Einheit verbunden, so bietet solch eine Anordnung den weiteren Vorteil, dass über das Bussystem instandhaltungsrelevante Informationen bezüglich des Feldgerätes zwischen dem Feldgerät und dem computerunterstützten Instandhaltungssystem austauschbar sind. In diesem Fall ist es vorteilhaft, wenn das Feldgerät mit weiteren instandhaltungsrelevanten Informationen und Funktionen ausgestattet ist, insbesondere wenn in dem Feldgerät eine Liste der Ersatzteile für das Feldgerät und deren relevante Bestellinformationen, und/oder gerätespezifische Informationen bezüglich durchzuführender Instandhaltungsarbeiten gespeichert sind. Dann kann das Feldgerät über das Bussystem eine Anforderung von einem oder mehreren Ersatzteil(en), und/oder eine Anforderung bezüglich einer vorzunehmenden Instandhaltungsarbeit an das computerunterstützte Instandhaltungssystem senden. Diese gesendeten Informationen werden dann beispielsweise in dem computerunterstützten Instandhaltungssystem verarbeitet und entsprechende Arbeitsaufträge (Auftrag zum Bestellen eines Ersatzteils bzw. Auftrag zum Durchführen einer Instandhaltungsarbeit) für das Wartungspersonal erstellt. Diese Arbeitsaufträge können dann wiederum von dem Wartungspersonal über das Internet und das mobile, in der Hand tragbare Gerät abgerufen werden. Dadurch wird eine schnelle Ausführung der erforderlichen Instandhaltungsarbeiten mit niedrigem Personalaufwand gewährleistet.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:

Fig. 1: eine schematische Darstellung eines Feldbus-Netzwerkes und eines computerunterstützten Instandhaltungssystems gemäß einer ersten Ausführungsform der Erfindung; und

Fig. 2: eine schematische Darstellung eines Feldbus-Netzwerkes und eines computerunterstützten Instandhaltungssystems gemäß einer zweiten Ausführungsform der Erfindung.

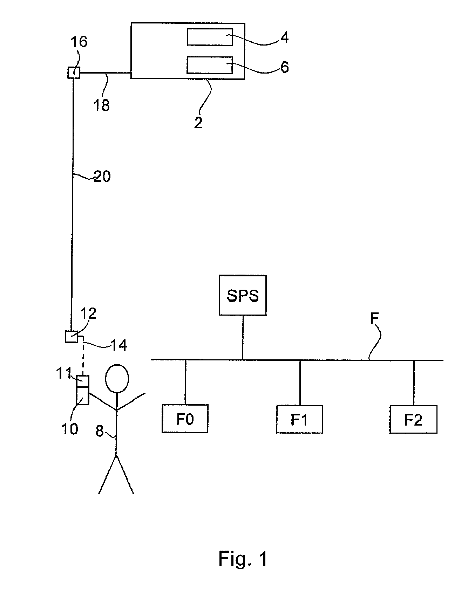

Die schematische Darstellung in Fig. 1 zeigt ein kleines Feldbus-Netzwerk, bei dem drei Feldgeräte F0, F1 und F2 und eine Steuereinheit SPS an einem Feldbus F angeschlossen sind. Die Steuereinheit SPS ist ein Master, während die Feldgeräte F0, F1 und F2 jeweils Slaves sind. Die Kommunikation zwischen der Steuereinheit SPS und den Feldgeräten F0, F1 und F2 erfolgt über den Feldbus F nach dem entsprechenden Feldbus-Standard (zum Beispiel Profibus®, Foundation® Fieldbus, etc.).

Räumlich getrennt von dem Feldbus-Netzwerk ist ein Computer 2 vorgesehen, auf dem ein computerunterstütztes Instandhaltungssystem implementiert ist. Im vorliegenden Fall wird das computerunterstützte Instandhaltungssystem durch ein CMMS 4 und ein PAM 6 gebildet. Das CMMS 4 und das PAM 6 führen dabei die oberhalb erläuterten Funktionen aus und verwalten die instandhaltungsrelevanten Informationen der Feldgeräte F0, F1 und F2 in einer Datenbank.

Im Folgenden wird ein Beispiel erläutert, bei dem in dem Feldgerät F0 ein Defekt aufgetreten ist. Eine Wartungsperson 8 wird zu dem Feldgerät F0 gesendet, um dieses zu reparieren. Dabei führt die Wartungsperson 8 einen PDA 10 mit sich. Oftmals sind Feldgeräte mit einem (nicht dargestellten) GPS-Empfänger ausgestattet, so dass sie ihre Position exakt bestimmen und einfach durch einen PDA 10, der ebenfalls mit einem (nicht dargestellten) GPS-Empfänger ausgestattet ist, geortet werden können. Auf dem PDA 10 kann die Wartungsperson 8 bereits im Voraus instandhaltungsrelevante Informationen bezüglich des Feldgerätes F0 abspeichern, so dass diese vor Ort verfügbar sind.

Sind für die Durchführung der Reparatur weitere Informationen erforderlich, so kann die Wartungsperson 8 über das Internet Verbindung zu dem computerunterstützten Instandhaltungssystem auf dem Computer 2 aufnehmen. Hierzu ist in dem vorliegenden Ausführungsbeispiel im Bereich der Anlage, an der sich die Feldgeräte F0, F1 und F2 befinden, ein Hotspot-System eingerichtet. Der PDA 10 weist eine W-LAN Schnittstelle 11 auf, über die der PDA 10 zu dem lokalen W-LAN, das durch das Hotspot-System bereitgestellt wird, Zugang erhalten kann. Ferner weist das Hotspot-System eine Schnittstelle 12 zwischen dem W-LAN und dem Internet auf. In Fig. 1 ist die Verbindung zwischen dem PDA 10 und der Schnittstelle 12, die über das W-LAN erfolgt, als gestrichelte Linie 14 dargestellt. Demgemäß wird über das Hotspot-System ein drahtloser Internetzugang von dem PDA 10 aus hergestellt. Auch der Computer 2, auf dem das CMMS 4 und das PAM 6 implementiert sind, ist über ein stationäres Modem 16, mit dem der Computer 2 über eine entsprechende Leitung 18 verbunden ist, an dem Internet angeschlossen. Die Internetverbindung zwischen der Schnittstelle 12 und dem Modem 16 ist in Fig. 1 durch die durchgezogene Linie 20 dargestellt.

Zum Anfordern weiterer Informationen sendet die Wartungsperson 8 von dem PDA 10 über das Internet eine entsprechende Anfrage, in der in der Regel gleichzeitig der Zeitpunkt der Anfrage, die Identität der Wartungsperson 8, der Grund für die Anfrage, die vorzunehmende Handlung, der Ort und eine Kennziffer zur Identifizierung des Feldgerätes F0 eingegeben werden. Die Angaben, die bei einer solchen Anfrage zu übermitteln sind, können je nach Einzelfall und je nach verwendetem computerunterstütztem Instandhaltungssystem variieren. Die angeforderten Informationen werden anschließend von dem Computer 2 über das Internet direkt an den PDA 10 gesendet.

Nachdem die Wartungsperson die Reparaturarbeiten vorgenommen hat, gibt sie einen Servicebericht in den PDA 10 ein. Dieser Servicebericht kann dabei den Ort und eine Kennziffer des reparierten Feldgerätes F0, die vorgenommenen Handlungen, den Zusammenhang und den Umfang der Handlungen, die zur Problemlösung verwendeten Unterlagen, eine Problemdiagnose, die Beschreibung der Lösung, die Angabe der verwendeten Ersatzteile und/oder eine erforderliche Kontaktaufnahme mit einem Spezialisten, etc umfassen, wobei die jeweiligen anzugebenden Informationen je nach Einzelfall und je nach verwendetem computerunterstützten Instandhaltungssystem variieren können. Der Servicebericht kann nach Fertigstellung automatisch zwischen dem PDA 10 und dem Computer 2, insbesondere dem CMMS 4 und dem PAM 6, über das Internet synchronisiert werden.

Sollte für die Durchführung der Reparatur ein Ersatzteil erforderlich sein, so kann die Wartungsperson 8 über das PDA 10 und das Internet direkt eine Bestellung an einen Hersteller oder Lieferanten des Ersatzteiles oder an ein Ersatzteillager des Anlagenbetreibers absenden. Gegebenenfalls kann die Wartungsperson 8 über das Internet und das PDA 10 eine entsprechende Bestätigung erhalten, dass das bestellte Ersatzteil verfügbar ist.

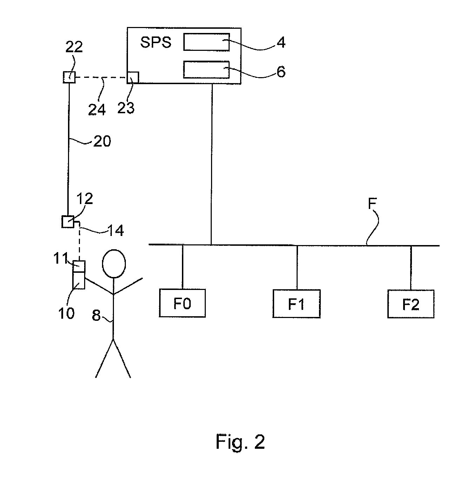

Im Folgenden wird unter Bezugnahme auf die Fig. 2 eine zweite Ausführungsform der vorliegenden Erfindung erläutert. Dabei werden gleiche Bauteile mit den gleichen Bezugszeichen bezeichnet. Im Folgenden wird lediglich auf die Unterschiede gegenüber der ersten Ausführungsform eingegangen.

Bei der zweiten Ausführungsform sind das CMMS 4 und das PAM 6 in die Steuereinheit SPS, die an dem Feldbus F angeschlossen ist, integriert. Dadurch ist es möglich, dass instandhaltungsrelevante Informationen zwischen den einzelnen Feldgeräten F0, F1 und F2 und dem CMMS 4 und/oder dem PAM 6 direkt über den Feldbus F austauschbar sind.

Die Steuereinheit SPS weist ferner eine W-LAN Schnittstelle 23 auf, so dass von der Steuereinheit SPS über ein Hotspot-System ein Internetzugang herstellbar ist, wie dies oberhalb in Bezug auf die erste Ausführungsform bei dem Internetzugang des PDA 10 erläutert wurde. Die Schnittstelle zwischen dem W-LAN und dem Internet ist in Fig. 2 mit der Bezugszahl 22 bezeichnet. Die W-LAN Verbindung zwischen der Steuereinheit SPS und der Schnittstelle 22 ist in Fig. 2 durch eine gestrichelte Linie 24 schematisch dargestellt. Demgemäß kann eine Wartungsperson, die sich an einem der Feldgeräte F0, F1 oder F2 befindet und die ein PDA 10 mit sich führt, über das Internet mit der Steuereinheit SPS instandhaltungsrelevante Informationen austauschen.

Dadurch, dass die Feldgeräte F0, F1 und F2 jeweils über den Feldbus F mit der Steuereinheit SPS und damit mit dem CMMS 4 und dem PAM 6 instandhaltungsrelevante Informationen austauschen können, ist bei dieser Ausführungsform vorgesehen, dass die einzelnen Feldgeräte F0, F1 und F2 mit weiteren instandhaltungsrelevanten Informationen und Funktionen ausgestattet sind. Insbesondere kann ein Feldgerät F0, F1 oder F2 eine Instandhaltungsmaßnahme auslösen, indem es beispielsweise bei Auftreten eines bestimmten Fehlers oder bei Überschreiten bestimmter Grenzwerte einen entsprechenden Auftrag an die Steuereinheit SPS sendet. Dieser Auftrag wird dann in dem CMMS 4 und/oder in dem PAM 6 verarbeitet, und es wird ein entsprechender Arbeitsauftrag für das Wartungspersonal erstellt. Die Wartungsperson 8 wiederum kann den Auftrag und gegebenenfalls weitere Informationen über das Internet und den PDA 10 von dem CMMS 4 und/oder dem PAM 6 abrufen.

Ferner können die Feldgeräte F0, F1, F2 derart ausgebildet sein, dass sie eine Liste der Ersatzteile für das Feldgerät und deren relevante Bestellinformationen, insbesondere deren Bestellnummern, verwalten. Wird in einem Feldgerät F0, F1 oder F2 eine Meldung dahingehend erzeugt, dass ein bestimmtes Teil zu ersetzen ist oder wird dem Feldgerät F0, F1 oder F2 diese Meldung durch eine Wartungsperson 8 während einer Inspektion eingegeben, so kann das Feldgerät F0, F1 oder F2 direkt eine entsprechende Bestellung des Ersatzteiles über den Feldbus F an die Steuereinheit SPS absenden. Das CMMS 4 kann dann überprüfen, ob das Ersatzteil in einem Ersatzteillager des Anlagenbetreibers oder bei einem Hersteller oder Lieferanten verfügbar ist. Wartungspersonal kann dann wiederum auf die von der Steuereinheit SPS und insbesondere auf die von dem CMMS 4 und/oder dem PAM 6 bereitgestellten Informationen und Arbeitsaufträge zugreifen und im vorliegenden Fall eine Bestellung von Ersatzteilen absenden.

Zusätzlich können in den Feldgeräten F0, F1 und F2 gerätespezifische Informationen bezüglich durchzuführender Instandhaltungsarbeiten gespeichert sein, um die Tätigkeiten des Wartungspersonals zu unterstützen. In diesem Fall können die einzelnen Feldgeräte F0, F1 und F2 wiederum bei Bedarf, z.B. bei Ablauf eines Instandhaltungsintervalls, eine Nachricht an die Steuereinheit SPS, und insbesondere an das CMMS 4 und das PAM 6, über den Feldbus F dahingehend senden, dass eine bestimmte Instandhaltungsmaßnahme durchzuführen ist. Wie oberhalb erläutert wurde, wird diese Nachricht wiederum in dem CMMS 4 und/oder dem PAM 6 verarbeitet, und eine Wartungsperson kann die relevanten Informationen bzw. den Arbeitsauftrag über das PDA 10 von dem CMMS 4 und/oder dem PAM 6 abrufen.

Die vorliegende Erfindung ist nicht auf die in den Figuren dargestellten und oberhalb beschriebenen Ausführungsbeispiele beschränkt. Die Art des Internetzugangs des Computers oder der Steuereinheit, auf der das computerunterstützte Instandhaltungssystem implementiert ist, ist für die Ausführung der vorliegenden Erfindung unerheblich. Der Internetzugang kann beispielsweise als stationärer Internetzugang, wie beispielsweise bei einem Kabelmodem, oder auch als mobiler, das heißt drahtloser Internetzugang ausgebildet sein. Ferner ist nicht zwingend erforderlich, dass die einzelnen Feldgeräte über ein Bussystem an die übergeordnete Einheit bzw. Steuereinheit angeschlossen sind. Beispielsweise ist auch eine Parallelverdrahtung oder eine analoge Signalübertragung zwischen den Feldgeräten und der übergeordneten Einheit möglich.

## Patentansprüche

1. Verfahren zum Austausch von instandhaltungsrelevanten Informationen bezüglich eines Feldgerätes (F0, F1, F2) mit einem computerunterstützten Instandhaltungssystem (4, 6), das in einer Datenbank instandhaltungsrelevante Informationen bezüglich des Feldgerätes (F0, F1, F2) verwaltet, unter Verwendung eines mobilen, in der Hand tragbaren Gerätes (10), das eine Schnittstelle (11) für einen drahtlosen Internetzugang aufweist,
wobei das Verfahren die nachfolgenden Schritte aufweist:
Herstellen eines drahtlosen Internetzugangs von dem mobilen, in der Hand tragbaren Gerät (10);
Austausch von instandhaltungsrelevanten Informationen bezüglich des Feldgerätes (F0, F1, F2) zwischen dem computerunterstützten Instandhaltungssystem (4, 6), das am Internet angeschlossen ist, und dem mobilen, in der Hand tragbaren Gerät (10) über das Internet.

2. Verfahren gemäß Anspruch 1, **dadurch gekennzeichnet, dass** das mobile, in der Hand tragbare Gerät (10) eine W-LAN (Wireless Local Area Network) Schnittstelle (11) aufweist, so dass über ein W-LAN ein Zugang des mobilen, in der Hand tragbaren Gerätes (10) zum Internet herstellbar ist; und/oder dass der Internetzugang des mobilen, in der Hand tragbaren Gerätes (10) über HSDPA, UMTS, EDGE oder GPRS herstellbar ist;
wobei das mobile, in der Hand tragbare Gerät (10) vorzugsweise einen integrierten Webbrowser aufweist.

3. Verfahren gemäß Anspruch 1 oder 2, **dadurch gekennzeichnet, dass** der Schritt des Austauschens von instandhaltungsrelevanten Informationen bezüglich des Feldgerätes (F0, F1, F2) das Abrufen von instandhaltungsrelevanten Informationen bezüglich des Feldgerätes (F0, F1, F2) von dem computerunterstützten Instandhaltungssystem (4, 6) durch das mobile, in der Hand tragbare Gerät (10), insbesondere das Abrufen von
Gerätedaten des Feldgerätes (F0, F1, F2),
Handbüchern zu dem Feldgerät (F0, F1, F2),
Checklisten,
Gewährleistungsinformationen,
Instandhaltungsintervallen,
Serviceverträgen,
Informationen über das Kaufdatum des Feldgerätes (F0, F1, F2),
Informationen über die zu erwartende Lebensdauer des Feldgerätes (F0, F1, F2),
Ersatzteilinformationen zu dem Feldgerät (F0, F1, F2),
Informationen bezüglich der Verfügbarkeit von Ersatzteilen, Datum der letzten Instandhaltungsmaßnahme des Feldgerätes (F0, F1, F2),
Informationen zu Fehlermeldungen des Feldgerätes (F0, F1, F2) und zur Problembehandlung,
statistische Informationen bezüglich der Häufigkeit von verschiedenen Defekten und/oder von bereits vorgenommenen Instandhaltungsarbeiten, Informationen über verfügbares Wartungspersonal, Informationen zur Parametrierung, Kalibrierung und/oder Konfigurierung des Feldgerätes (F0, F1, F2),
Informationen bezüglich einer Zustandsüberwachung des Feldgerätes (F0, F1, F2), und/oder
von dem computerunterstützten Instandhaltungssystem (4, 6) erstellte Arbeitsaufträge,
umfasst.

4. Verfahren gemäß einem der vorangehenden Ansprüche, **dadurch gekennzeichnet, dass** der Schritt des Austauschens von instandhaltungsrelevanten Informationen bezüglich des Feldgerätes (F0, F1, F2) das Eingeben von instandhaltungsrelevanten Informationen bezüglich des Feldgerätes (F0, F1, F2) von dem mobilen, in der Hand tragbaren Gerät (10) in das computerunterstützte Instandhaltungssystem (4, 6),
insbesondere das Eingeben von
einem Servicebericht,
erforderlichen Ersatzteilen,
einem Auftrag bezüglich weiterer vorzunehmender Instandhaltungsarbeiten,
und/oder
einen Fehlerbericht,
umfasst.

5. Verfahren gemäß einem der vorangehenden Ansprüche, **dadurch gekennzeichnet, dass** das computerunterstützte Instandhaltungssystem (4, 6) in einer Datenbank instandhaltungsrelevante Informationen bezüglich einer Vielzahl von Feldgeräten (F0, F1, F2) einer oder mehrerer Anlagen verwaltet.

6. Verfahren gemäß einem der vorangehenden Ansprüche, **dadurch gekennzeichnet, dass** das mobile, in der Hand tragbare Gerät (10) eine Datenverarbeitungseinheit aufweist, insbesondere dass das mobile, in der Hand tragbare Gerät (10) ein PDA (Personal Digital Assistant bzw. Persönlicher Digitaler Assistent) ist.

7. Verfahren gemäß einem der vorangehenden Ansprüche, **dadurch gekennzeichnet, dass** der Austausch von instandhaltungsrelevanten Informationen bezüglich des Feldgerätes (F0, F1, F2) zwischen dem computerunterstützten Instandhaltungssystem (4, 6) und dem mobilen, in der Hand tragbaren Gerät (10) **dadurch** erfolgt, dass das mobile, in der Hand tragbare Gerät (10) und das computerunterstützte Instandhaltungssystem (4, 6) über das Internet miteinander synchronisiert werden.

8. Verfahren gemäß einem der vorangehenden Ansprüche, **dadurch gekennzeichnet, dass** in dem Fall, in dem ein Ersatzteil für das Feldgerät (F0, F1, F2) erforderlich ist, der nachfolgende Schritt ausgeführt wird: Absenden einer Bestellung für das Ersatzteil von dem mobilen, in der Hand tragbaren Gerät (10) über den drahtlosen Internetzugang an einen Hersteller oder Lieferanten des Ersatzteils oder an ein Ersatzteillager.

9. Verfahren gemäß einem der vorangehenden Ansprüche, **dadurch gekennzeichnet, dass** das computerunterstützte Instandhaltungssystem (4, 6) ein "CMMS" (Computerised Maintenance Management System bzw. Computerunterstütztes Instandhaltungs-Management-System) (4) und/oder ein "PAM" (Plant Asset Management bzw. Anlagen-Asset-Management) (6) umfasst.

10. Verfahren gemäß einem der vorangehenden Ansprüche, **dadurch gekennzeichnet, dass** das computerunterstützte Instandhaltungssystem (4, 6) als Software auf einem Computer (2) und/oder auf einer mit mindestens einem Feldgerät (F0, F1, F2) verbundenen übergeordneten Einheit (SPS), der/die mit dem Internet verbindbar ist, implementiert ist.

11. Verfahren gemäß einem der vorangehenden Ansprüche, **dadurch gekennzeichnet, dass** das Feldgerät (F0, F1, F2) über ein Bussystem (F) mit einer übergeordneten Einheit (SPS) verbunden ist, wobei auf der übergeordneten Einheit (SPS) das computerunterstützte Instandhaltungssystem (4, 6) implementiert ist, so dass über das Bussystem (F) instandhaltungsrelevante Informationen bezüglich des Feldgerätes (F0, F1, F2) zwischen dem Feldgerät (F0, F1, F2) und dem computerunterstützten Instandhaltungssystem (4, 6) austauschbar sind, insbesondere dass das Feldgerät (F0, F1, F2) an das computerunterstützte Instandhaltungssystem (4, 6)
eine Anforderung von einem oder mehreren Ersatzteil(en), und/oder eine Anforderung bezüglich einer vorzunehmenden Instandhaltungsarbeit, über das Bussystem (F) sendet.

12. Verfahren gemäß Anspruch 11, **dadurch gekennzeichnet, dass** in dem Feldgerät (F0, F1, F2)
eine Liste der Ersatzteile für das Feldgerät (F0, F1, F2) und deren relevante Bestellinformationen, und/oder
gerätespezifische Informationen bezüglich durchzuführender Instandhaltungsarbeiten
gespeichert sind.
